Europäisches Patentamt

European Patent Office

Office européen des brevets

(19)

(11) Veröffentlichungsnummer: **0 231 940**

**A2**

(12) **EUROPÄISCHE PATENTANMELDUNG**

(21) Anmeldenummer: **87101511.1**

(22) Anmeldetag: **04.02.87**

(51) Int. Cl.⁴: **H01L 41/08**

(30) Priorität: **04.02.86 DE 3603353**
   **04.02.86 DE 3603329**

(43) Veröffentlichungstag der Anmeldung:
   **12.08.87 Patentblatt 87/33**

(84) Benannte Vertragsstaaten:
   **DE FR GB IT**

(71) Anmelder: **Siemens Aktiengesellschaft Berlin
   und München
   Wittelsbacherplatz 2
   D-8000 München 2(DE)**

(72) Erfinder: **Stein, Dieter, Dipl.-Phys.
   Albrecht-Dürer-Ring 70
   D-8150 Holzkirchen(DE)**
   Erfinder: **Meixner, Hans, Dr., Dipl.-Phys.
   Max-Planck-Str. 5
   D-8031 Haar(DE)**
   Erfinder: **Kleinschmidt, Peter, Dipl.-Phys.
   Klagenfurter Str. 12
   D-8000 München 90(DE)**

(54) **Piezoelektrischer Antrieb.**

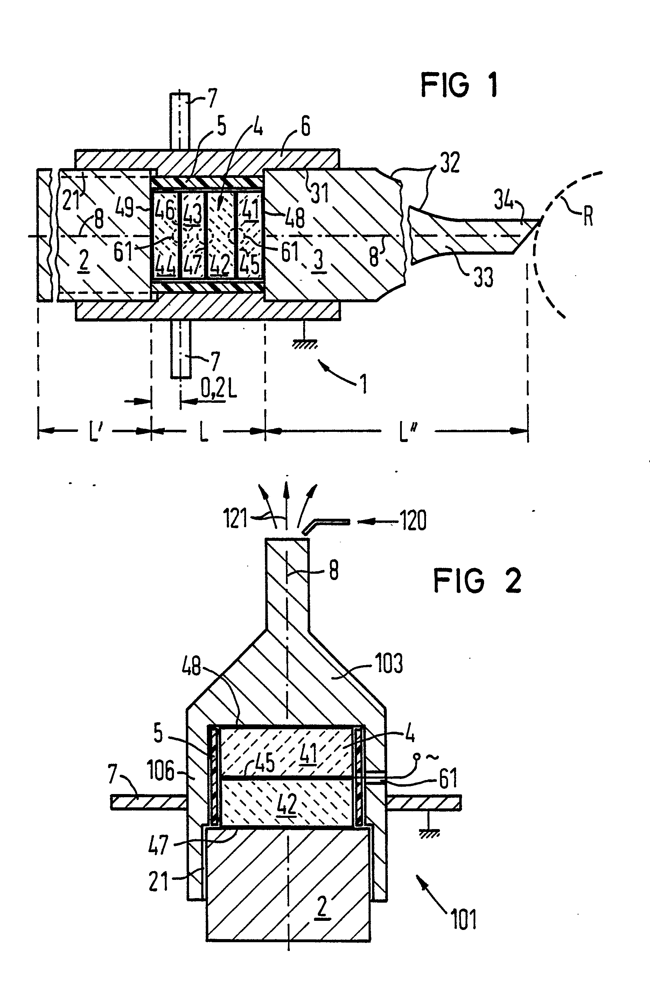

(57) Piezoelektrischer Antrieb als Motor (Fig. 1), Zer-stäuber (Fig. 2) und dgl. mit zwei Masseteilen (2, 3), die mittels eines hülsenförmigen Teils (6) zusammengehalten sind, wobei dieses Teil (6) den piezokeramischen Körper (4) umschließt. Eine für insbesondere einen solchen Motor geeignete Antriebsübertragung weist an dem einen Ende des Stößels eine solche Friktionsfläche (105, 125, 115) auf, die in einem Winkel ($\beta$) abgeschrägt ist. Eine der beiden gegenüberliegenden Flächen (105, 125; 108, 128) hat konvexe Form mit tangentialer Berührung der Flächen.

FIG 1

EP 0 231 940 A2

## Piezoelektrischer Antrieb

Die vorliegende Erfindung bezieht sich auf einen piezoelektrischen Antrieb, wie im Oberbegriff des Patentanspruchs 1 angegeben.

Ein piezoelektrischer Antrieb der vorliegenden Erfindung eignet sich insbesondere für einen piezoelektrischen Motor.

Piezoelektrische Motoren sind bekannt aus DE-A-25 30 045, DE-A-33 09 239, DE-AS 14 88 698 und DE-AS 12 35 824. Sie erzeugen im Ergebnis Rotationsbewegung.

Ein piezoelektrischer Antrieb mit Linearbewegung, wie dies auch bei der noch nachfolgend näher zu beschreibenden Erfindung der Fall ist, ist auch als Flüssigkeitszerstäuber bekannt, so z.B. aus VDI-Z. 108 (1966), S. 1670 - 1674, insbesondere Bild 1 bis Bild 3. Weitere ähnliche Anordnungen gehen hervor aus der DE-AS 13 03 771 und der US-PS 3 275 059.

Der Ultraschall-Koppelschwinger nach VDI-Z. 108 (1966), S. 1670, Bild 1, umfaßt ein piezoelektrisches Element, das z.B. aus Piezokeramik bestehen kann, und zwei abgestufte Zylinderstäbe. Das Piezoelement ist zwischen den zwei Zylinderstäben eingespannt, und zwar zwischen mittels Schraubbolzen angespannten Flanschen. Die Gesamtanordnung dieses Koppelschwingers ist, bezogen auf das Piezoelement und die Achse des Koppelschwingers, symmetrisch ausgeführt. Das Piezoelement ist in einem der Schwingungsknoten angeordnet. Das Piezoelement befindet sich somit im Bereich maximaler innerer Kräfte des Schwingers bzw. maximaler mechanischer Verzerrung. An beiden Enden des Schwingers treten gleichermaßen Schwingungsbäuche auf. Ein Ende eines solchen Schwingers wird als Zerstäuber für Flüssigkeit verwendet. Das andere Ende läuft leer. Ein unsymmetrischer Koppelschwinger ist in Bild 2 dieser Druckschrift dargestellt, bei dem sich das Piezoelement nachteiligerweise im Bereich eines Schwingungsbauches befindet. Die Bilder 3 und 8 zeigen Koppelschwinger, bei denen das Piezoelement weder im Schwingungsknoten noch im Schwingungsbauch angeordnet ist. Allen Koppelschwingern der letztgenannten Druckschrift ist gemeinsam, daß sie durch entsprechende Abstufung der normal zur Axialrichtung der Schwinger vorhandenen Materialquerschnitte die Eigenschaft einer Amplitudentransformation besitzen. Dabei geht es insbesondere darum, kleine longitudinale Verzerrungen bzw. Elongationen (in der Axialrichtung) des Piezoelements in vergleichsweise relativ große Elongationen der endseitigen Stirnflächen des Schwingers zu übersetzen, und zwar bei entsprechender reziproker Transformation der jeweils auftretenden Kräfte.

Weitere Erläuterungen zu Koppelschwingern sind zu erhalten aus "Piezoxide-Wandler", Herausgeber Valvo GmbH, S.120-138.

Aufgabe der vorliegenden Erfindung ist es, einen auf dem Prinzip eines Longitudinalschwingers beruhenden piezoelektrischen Antrieb anzugeben, der einen einfach bzw. in der Herstellung wenig aufwendigen Aufbau hat, dennoch aber einen hohen Gesamtwirkungsgrad für die Umwandlung aufgenommener elektrischer Kraft bzw. Energie in longitudinale mechanische Kraft bzw. Energie. Insbesondere soll ein solcher Aufbau vorliegen, der robust und gegen äußere Einflüsse geschützt ist.

Aufgabe einer besonderen Ausführung der Antriebsübertragung ist, für diese hohe Lebensdauer zu erzielen.

Für das Antriebselement wird die Aufgabe durch die Merkmale des Patentanspruches 1 gelöst und die Merkmale des Anspruchs 11 lösen die Aufgabe für die Antriebsübertragung. Ausgestaltungen und Weiterbildungen gehen aus den Unteransprüchen hervor.

Der Erfindung liegen eine Reihe von Einzelüberlegungen zugrunde, deren aufeinander abgestimmte Anwendung und Anpassung zueinander schließlich zur erfindungsgemäßen Lösung gefunden hat. Wie die obengenannten Druckschriften zeigen, läuft die technische Entwicklung auf diesem Fachgebiet bereits seit Jahrzehnten und dennoch ist es mit der Erfindung gelungen, einen weiteren Fortschritt hinsichtlich eines einfach herstellbaren, robusten piezoelektrischen Antriebselements mit hoher Antriebseffektivität zu finden.

Das aus einem ersten und einem zweiten Masseteil bestehende Antriebselement ist so aufgebaut, daß sich das Piezoelement, d.h. die piezoelektrische Keramik in axialer Reihenanordnung zwischen diesen zwei Masseteilen befindet. Die Keramik ist dort fest eingespannt. Wie ebenfalls bereits bekannt, unterscheidet sich das Material bzw. ein wesentlicher Anteil des Materials des einen Masseteils hinsichtlich des Produktes aus dem Elastizitätsmodul E und der Dichte roh möglichst weitgehend von dem entsprechenden Produkt für das Keramikmaterial und dieses wiederum möglichst weitgehend von diesem Produkt des auf der anderen Seite gelegenen weiteren Masseteils. Bei genauer Betrachtung ist an sich noch der jeweilige Querschnitt, dieser auf die Achse bezogen, des jeweiligen Masseteils und des Keramikteils als weiterer Faktor in dem Produkt aus Elastizitätsmodul und Dichte zu berücksichtigen, und zwar jeweils der Querschnitt im Bereich des betreffenden Übergangs zwischen Masseteil und Keramikteil. Für die vorliegende Erfindung ist davon ausgegangen worden, daß diesbezüglich wesentliche jeweilige Querschnittsunterschiede nicht vorgesehen werden, d.h. die Querschnitte des erfindungsgemäßen Antriebselements im Bereich dieser Übergänge zwischen einem Masseteil und der Keramik und der Keramik und dem anderen Masseteil weitgehend gleich groß gehalten sind. Vorhandene Unterschiede ergeben sich in erster Linie aus konstruktiven Anpassungen. Die Beibehaltung im wesentlichen gleichen Querschnittes in diesen Bereichen ist ein Gesichtspunkt der vorliegenden Erfindung. Davon unabhängig ist entsprechend der vorgesehenen Amplitudentransformation eine wesentliche Querschnittsverringerung für den amplitudentransformierten Anteil vorgesehen, wobei diese Querschnittsverringerung jedoch außerhalb eines Übergangsbereiches zwischen Keramik und angrenzendem Masseteil vorliegt.

Weiterer Teil des Gedankenganges, der zur Erfindung geführt hat, ist die Verwendung eines Konstruktionsteils mit der Form einer Hülse bzw. das Vorhandensein einer Topfform, deren Seitenwandanteil einer Hülse entsprechend ist. Bei der Erfindung hat dieses hülsenförmige Teil mehrfache funktionelle Bedeutung. Zum einen dient dieses Teil dazu, die beiden Masseteile möglichst fest miteinander zu verbinden. Zum anderen bildet dieses hülsenförmige Teil zusammen mit den zwei Masseteilen einen Hohlraum, in dem die Keramik des Piezoelements angeordnet werden kann, und zwar zuverlässig geschützt gegen unerwünschte äußere Einwirkungen bzw. Beschädigungen. Auf diese Weise läßt sich auch ein einfach zu realisierender explosionsgeschützter Aufbau erreichen. Das hülsenförmige Teil vermag diejenigen in axialer Richtung ausgerichteten Zug-bzw. Spannungskräfte aufzunehmen bzw. auszuüben, die bei der Erfindung vorgesehen sind, um das Piezoelement zwischen den zwei Masseteilen fest einzuspannen. Dabei ist die Kraft der Einspannung so hoch gewählt, daß auch die Kräfte im Betrieb auftretender mechanischer Schwingungen durch die Einspannkraft in jedem Falle übertroffen werden. Das hülsenförmige Teil hat insofern auch die Funktion einer äußerst starken Zugfeder. Dem hülsenförmigen Teil kommt aber auch noch eine weitere, besonders vorteilhafte Funktion zu. Es dient der Anbringung bzw. Befestigung des bekanntermaßen erforderlichen Halteflansches. Dabei kann der Ort der Anbringung dieses Halteflansches, bezogen auf das ganze Antriebselement, in jeweils einfacher Weise ausgewählt werden bzw. die Anbringung des Halteflansches durchgeführt werden. Auch beim erfindungsgemäßen Antriebselement ist der Halteflansch in der Ebene des Schwingungsknotens des Antriebselements angeordnet, das ein freischwingendes Element ist. Diese Ebene liegt je nach Bemessung im Bereich des piezoelektrischen Keramikteils des Elements. Die genaue und optimale Lage des Halteflansches in bezug auf das Antriebselement und damit auf die Hülse kann z.B. experimentell durch entsprechendes Verschieben aufgefunden werden. Dies kann für einzelne Prototypen durchgeführt werden und für die Serienproduktion erfolgt die dementsprechende Festlegung des Orts des Halteflansches.

Überraschenderweise wurde festgestellt, daß ein besonders hoher Wirkungsgrad bzw. besonders hohe Effektivität eines erfindungsgemäßen Antriebselementes erreicht werden kann, wenn für eine Kombination mit hohem Unterschied des Produkts aus Elastizitätsmodul und Dichte zwischen dem einen Masseteil und dem Keramikteil sowie zwischen dem Keramikteil und dem anderen Masseteil, der Halteflansch nahe dem Übergang zwischen dem dem Abtriebsende gegenüberliegenden Masseteil und dem Keramikteil, jedoch noch im Bereich des Keramikteils, liegt. Für ein Verhältnis von z.B. 5:1 der Werte des Produktes aus Elastizitätsmodul und Dichte des einen Masseteils und des Keramikteils und etwa gleich großem Verhältnis der Werte des jeweiligen Produktes für das Keramikteil und des anderen Masseteils ergibt sich als optimaler Ort für den Halteflansch diejenige Querschnittsebene, die etwa um das Maß 20% der axialen Gesamtdicke des Keramikteils vom Übergang zwischen dem Masseteil mit höchstem Wert dieses Produktes und dem Keramikteil entfernt liegt. Es ist dies eine unsymmetrische Anordnung des Halteflansches, bezogen auf die Anordnung des Keramikteils zwischen den beiden Masseteilen, zu der die übrigen Bemessungen angepaßt gewählt sind.

Weitere Erläuterungen der Erfindung gehen aus der nachfolgenden Beschreibung von Ausführungsbeispielen der Erfindung hervor.

Figur 1 zeigt eine erste Ausführungsform der Erfindung.

Figur 2 zeigt eine zweite Ausführung.

Figur 3 zeigt eine Lamellenanordnung des Keramikteils.

Figur 4 zeigt eine Antriebsübertragung auf ein Rad.

Figur 5 zeigt eine Antriebsübertragung auf ein Element, das in linearer Richtung zu bewegen ist und

Figur 6 zeigt in vergrößerter Darstellung das Prinzip der Oberflächenabnutzung, das der mit dieser Antriebsübertragung erzielbaren Lebensdauerverlängerung zugrundeliegt.

In Figur 1 ist mit 1 eine erste Ausführungsform eines erfindungsgemäßen Antriebselements bezeichnet. Das eine (erste) Masseteil ist mit 2 und ein zweites Masseteil ist mit 3 bezeichnet. Mit 4 ist das Piezoelement bzw. der Piezokeramikteil des Antriebselements 1 bezeichnet. Das Keramikteil 4 ist mit einer elektrischen Isolation 5 umgeben. Mit 6 bezeichnet ist das hülsenförmige Teil und mit 7 ist der Halteflansch bezeichnet.

Gemäß einem Merkmal der Erfindung gilt für die Masseteile 2, 3 und das Keramikteil 4, daß der jeweilige Wert des Produktes E . roh für das Masseteil 2 am größten, für das Masseteil 3 am kleinsten und für das Keramikteil 4, nämlich für die Keramik dazwischenliegend bemessen ist. Einen hohen Wert dieses Produktes erhält man für die Metalle Eisen, Nickel, Molybdän, Wolfram und dgl.. Einen vergleichsweise niedrigen Wert für dieses Produkt (für das Masseteil 3) erhält man für Aluminium, Elektron, Magnesium, Titan und Kunststoffmaterial, wie z.B. Scotch-Ply.

Für z.B. Molybdän oder Wolfram für das Masseteil 2 und ein angegebenes Material für das Teil 3 lassen sich Werte des Produktes aus Elastizitätsmodul und Dichte erzielen, die ein Verhältnis von 5:1:0,2 erreichen, nämlich für das Verhältnis dieses Wertes für das erste Masseteil 2 zum Keramikteil 4 und für das Verhältnis vom Keramikteil 4 zum zweiten Masseteil 3.

Das jeweilige Masseteil 2, 3 braucht nicht notwendigerweise aus nur ein und demselben Material bestehen, es können auch entsprechende Materialkombinationen hierfür verwendet werden. Eine derartige Materialkombination ist z.B. für das erste Masseteil 2 Wolfram und Stahl.

Eine entsprechende Materialkombination ist z.B. Elektron und Nickel für das Masseteil 3.

Das erfindungswesentliche hülsenförmige Teil 6 greift sowohl über das erste Masseteil 2 als auch über das zweite Masseteil 3. Die parallel zur Achse 8 verlaufende ringförmige Berührung zwischen dem ersten Masseteil 2 und dem Teil 6 bzw. zwischen dem zweiten Masseteil 3 und dem Teil 6 können verschiedenartig ausgestaltet sein. Insbesondere kann die Verbindung durch ein Gewinde 21 oder eine Schrumpfverbindung bzw. einen Paß-/Preßsitz 31 realisiert sein. Grundsätzlich lassen sich hierfür die dem Fachmann zur Verfügung stehenden formschlüssigen, kraftschlüssigen und ggf. auch stoffschlüssigen Verbindungsmöglichkeiten zwischen erstem Masseteil bzw. zweitem Masseteil und dem hülsenförmigen Teil 6 anwenden. Diese Verbindung bzw. das Einsetzen des ersten Masseteils 2 und des zweiten Masseteils 3 in das hülsenförmige Teil 6 kann so erfolgen, daß ein erheblicher axial gerichteter Druck auf das zwischen diesen beiden Masseteilen 2 und 3 befindliche Keramikteil 4 ausgeübt wird bzw. dieses Keramikteil 4 dadurch einen erheblichen Einspanndruck erfährt. Dieses piezoelektrische Keramikteil 4 wird elektrisch zu Bewegungen, insbesondere axial gerichteter Dilatation und Kontraktion anregt. Der von den beiden Masseteilen 2 und 3 ausgeübte, durch das hülsenförmige Teil 6 aufrechterhaltene Anpreßdruck ist erfindungsgemäß so hoch gewählt, daß im Betrieb auftretende Kräfte der entstehenden mechanischen Schwingungen die Einspannkraft niemals übersteigen können. Damit ist, dies ist für die Erfindung wesentlich, gewährleistet, daß bei Schwingungen des erfindungsgemäßen Antriebselements 1 niemals ein Luftspalt in axialer Richtung 8 innerhalb des Antriebselements, insbesondere im Bereich der Berührung zwischen Keramik und Masseteil 2, 3, auftreten könnte.

Prinzipiell genügt es, ein einziges piezoelektrisches Keramikteil 4 vorzusehen. Bei der Ausführungsform der Figur 1 sind als Beispiel vier Keramikscheiben 41, 42, 43, 44 vorgesehen, die (in axialer Richtung) aufeinanderliegend angeordnet sind. Diese Aufteilung dient in erster Linie der einfacheren elektrischen Betriebsweise. Die zwischen den Keramikscheiben 41 und 42 bzw. 43 und 44 jeweils befindliche Elektrode 45 und 46 wird vorteilhafterweise auf das Potential der Phase der Anregungswechselspannung gelegt. Die Elektrode 47 zwischen den Keramikscheiben 42 und 43 legt man dazu auf Massepotential. Weitere auf Massepotential zu legende Elektroden sind mit 48 und 49 bezeichnet.

In dem hülsenförmigen Teil 6 vorgesehene Löcher bzw. Durchbrüche 61 (nur gestrichelt angedeutet, da in der Schnittdarstellung der Figur 1 an sich nicht sichtbar) dienen dazu, elektrische Zuführungen für das Massepotential (für die Elektrode 47) und das an die Elektroden 45 und 46 anzulegende Potential hindurchzuführen. Die elektrische Anregung der Scheiben 41 bis 44 erfolgt mit Wechselspannung der durch die Schwingerfrequenz des Antriebselements 1 gegebenen Frequenz. Die Zuführungsleitungen selbst sind der Übersichtlichkeit halber nicht dargestellt. Es kann auch im Inneren der Hülse eine entsprechende Verdrahtung der Anschlüsse der Elektroden gleichen Potentials vorgesehen sein.

Vorteilhaft ist es, wenn für die Elektroden 48 und 49 Massepotential vorgesehen ist, da diese Elektroden dann die Masseteile 2 und 3 berühren können, die schon aufgrund des Berührungsschutzes auf Masse gelegt sind.

Im Prinzip kann der Halteflansch 7 auf dem äußeren Umfang des hülsenförmigen Teils 6 (arretierbar) axial verschieb bar bzw. verstellbar angeordnet sein. Für Justierzwecke kann dies sehr vorteilhaft sein. Für die Massenfabrikation wird man jedoch feste Anbringung des Halteflansches 7 am Umfang des Teils 6 bevorzugen. Der Flansch kann vorteilhafterweise ein Ring sein. Die Ringform ist aber nicht zwingend erforderlich. Die Anbringung des Halteflansches 7 erfolgt in der (quer zur Achse 8) gelegenen Ebene eines Schwingungsknotens des Antriebselements 1. Insofern ist auch die Befestigung zwischen dem Teil 6 und dem Halteflansch 7 problemlos. Insbesondere bei, wie oben angegebenem, großem Verhältnis der Werte des Produkts aus Elastizitätsmodul und Dichte ergibt sich hinsichtlich großer Antriebseffektivität eine optimale Lage, die in der Figur 1 zahlenmäßig angegeben ist. Demgegenüber eine Anordnung des Halteflansches 7 in der Ebene der Elektrode 49 oder 47 oder gar 48 vorzusehen wäre nachteiliger. Aufgrund der hohen erreichbaren Effektivität besitzt ein erfindungsgemäßes Antriebselement ein optimal kleines Leistungsvolumen (Volumen pro Watt abgegebener Antriebsleistung).

Mit 32 ist eine für Amplitudentransformation an sich wohl bekannte Querschnittsverjüngung des zweiten Masseteils 3 bezeichnet. Mit 33 ist der eigentliche Antriebsstößel und mit 34 ist das eigentliche Antriebsende des Antriebsstößels 33 bzw. Antriebselementes 1 bezeichnet. Andeutungsweise ist ein Rad R dargestellt, auf das von dem Antriebselement 1 Antriebsleistung übertragen wird. Der Antriebsstößel 33 bzw. sein Antriebsende kann auch so ausgebildet sein, daß damit Flüssigkeitszerstäubung entsprechend Flüssigkeitszerstäubern des oben beschriebenen Standes der Technik durchgeführt werden kann. Das freie Ende des Stößels 33 ist dann z.B. stumpf bzw. platt ausgebildet und/oder trägt z.B. eine Zerstäuberscheibe.

Figur 2 zeigt eine Variante 101 eines Antriebselements 1 nach Figur 1. In der Figur 2 angegebene Einzelheiten, die mit entsprechenden Einzelheiten der Figur 1 übereinstimmen, haben wiederum dasselbe Bezugszeichen. Die wesentliche Variation des Antriebselements 101 liegt in der Ausgestaltung des zweiten Masseteils 103, das mit dem hülsenförmigen Teil 106 zusammengenommen ein topfartiges Gebilde ist. Die beiden Teile 103 und 106 sind vorzugsweise einstückig oder formschlüssig miteinander verbunden. Für die Verbindung zwischen dem Masseteil 2 und dem dem hülsenförmigen Teil 106 entsprechenden Anteil ist vorzugsweise wiederum ein Schraubgewinde 21, mit dem der nötige axiale Druck auf das Piezoelement bzw. Keramikteil 4 auszuüben ist. Die Darstellung der Figur 2 zeigt lediglich zwei Scheiben 41 und 42 mit den zugehörigen Elektroden 45 und 47 und 48. Diese Elektroden werden auf wie zur Ausführungsform nach Figur 1 angegebene Potentiale gelegt bzw. wird an diese Elektroden die entsprechende Wechselspannung angelegt. Die Anbringung des Halteflansches 7 kann auch beim Antriebselement 101 in der zur Figur 1 beschriebenen Weise erfolgen bzw. ausgeführt sein. Auch für das Antriebselement 101 gilt die zur Figur 1 und auch bereits eingangs beschriebene Optimierung.

Das Antriebselement 101 ist als Zerstäuber für eine zugeführte Flüssigkeit 120 verwendet. Mit 121 ist die zerstäubte Flüssigkeit angedeutet.

Vorzugsweise sind die Längen L, L' und L" aufeinander abgestimmt bemessen. Die Längen L' und L" ergeben sich bei durch die Materialauswahl vorgegebenen Produktwerten $E \times roh \times A$ (A = Querschnittsfläche an der Grenzfläche Keramik-Masseteil; meistenteil praktisch vernachlässigbar) und bei vorgegebener Länge L (vorgegeben durch die geforderte Leistung) nach den Regeln der bekannten Impedanzanpassung (siehe auch Druckschrift "Piezoxide ...") und der gewünschten Betriebsfrequenz.

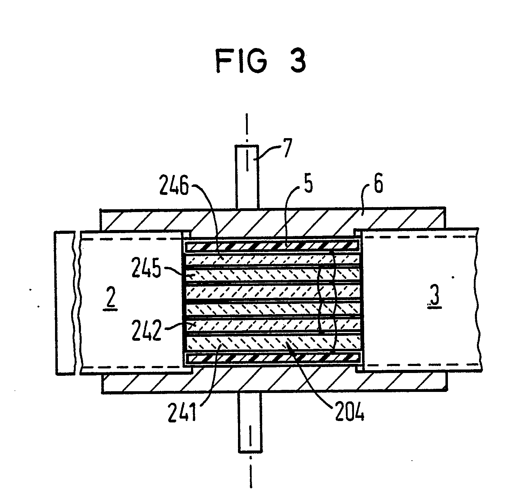

Figur 3 zeigt eine Anordnung, bei der das Keramikteil bzw. der piezoelektrische Körper 204 eine vergleichsweise zu den Figuren 1 und 2 um 90° gedrehte Schichtung, insbesondere eine Lamellierung aufweist. Die einzelnen Keramiklamellen sind mit 241 bis 246 bezeichnet.

Lamellierter Aufbau ist z.B. von piezoelektrischen Elongatoren her bekannt und eignet sich besonders für Anregung mit niedriger Wechselspannung. Der Vollständigkeit halber sei darauf hingewiesen, daß Lamellierung auch bei Ausführungen der Figuren 1 und 2 vorgesehen sein kann. Vorzugsweise hat ein geschichteter bzw. lamellierter Körper der Ausführungsform der Figur 3 rechteckigen Querschnitt (A) und die übrigen Teile sind auf diese Form abgestimmt. Wegen der mit einer Lamellierung verbundenen relativ geringen Dicke der Keramikteile 241 bis 246 eignet sich ein solcher Aufbau für Fälle, für die nur relativ niedrige Anregungsspannung zur Verfügung steht bzw. zur Anwendung kommen soll. Die Anregung erfolgt hier über den $d_{31}$-Effekt. Sonstige Einzelheiten entsprechen denen der Figuren 1 und 2.

Für eine Antriebsübertragung bei Anwendung eines solchen piezoelektrischen Antriebs als Motor ist eine Ausführung von Vorteil, wie sie nachfolgend beschrieben wird.

Eine solche Antriebsübertragung ist aber auch für abweichend ausgeführte Antriebe mit einem Schubkraft ausübenden longitudinalschwingenden Stößel als Abtriebselement geeignet.

Die Antriebsübertragung eines longitudinal - schwingenden Stößels ist gekennzeichnet dadurch, daß an dem abtreibenden Ende des Stößels die im Betrieb auszuübende Friktion von einer solchen Fläche auf das anzutreibende Element ausgeht, die eine gegenüber der longitudinalen Schwingungsrichtung abgeschrägte Form aufweist, wobei der Winkel (β) der Abschrägung im Berührungspunkt zwischen dem abtreibenden Stößel und dem anzutreibenden Element bezogen auf die Richtung der longitudinalen Schwingungsbewegung 5 bis 30° beträgt und wobei wenigstens eine der beiden einander gegenüberliegenden Flächen des abtreibenden Stößels und des anzutreibenden Elementes konvexe Form derart aufweist, daß eine tangentiale Berührung vorliegt. Der Winkel $\beta$ beträgt vorzugsweise 5 -20°. Insbesondere hat diese Fläche bezüglich einer Achse konvexe Form, wobei diese Achse senkrecht auf der Vorschubrichtung und senkrecht auf der longitudinalen Schwingungsrichtung seht. Vorzugsweise ist diese Fläche zweiachsig konvex gekrümmt (ballig). Insbesondere ist die Lage des Berührungs-"punktes" auf der schrägen Fläche des Stößels so bemessen, daß die Resonanzfrequenz der Verformung des berührenden Endes des Stößels auf die Anregungsfrequenz der Longitudinalschwingung des Stößels angepaßt ist. Vorzugsweise ist bei gegebener Lage des Berührungs-"punktes" der abgeschrägten Fläche des Stößels die Schwingungsfrequenz der Longitudinalschwingung des Stößels auf die gegebene Resonanzfrequenz der Verformungsbewegung abgestimmt.

Dieser Ausführung der Antriebsübertragung liegt der Gedanke zugrunde, eine Flächen-Friktion zu bevorzugen, bei der eine Abnutzung der Friktionsfläche weitgehend unbedeutend ist. Es ist vorgesehen, daß die Übertragung der Antriebskraft vom Ende des Elongationen ausführenden Stößels mit (im Gegensatz zu einer bekannten Übertragung über eine Spitze) einer wenigstens bis zu einem gewissen Grade flächenmäßigen Berührung erfolgt. Dabei kann die flächenmäßige Berührung zu Anbeginn bzw. in der Einlaufphase des Motors durchaus nahezu punkt-oder linienförmig sein. In dieser Anlaufphase eintretende stärkere Abnutzung (die z.B. noch vor Auslieferung des betreffenden Motors eintritt) kann gegebenenfalls nachjustiert werden, ohne daß aber weitere Justagen erforderlich sind. Letzteres liegt daran, daß mit einer anfänglichen Abnutzung eine solche Anpassung der sich unmittelbar berührenden Flächen eintritt, durch die diese Berührungsfläche flächenmäßig relativ stark anwächst. Nach einem solchen Einlaufen des Motors ist weitere Materialabnutzung so geringfügig, daß höchstens nach relativ langer Betriebsdauer eine Nachjustierung erforderlich ist. Im Rahmen der Erfindung kann auch automatische Nachjustierung vorgesehen sein.

Der voranstehend erörterte Gedanke reicht aber allein nicht aus, eine brauchbare Antriebsübertragung zu erzielen. Wesentlich ist außerdem, daß eine bestimmte Winkelstellung $\beta$ der abtreibenden Stirnfläche bzw. der tatsächlich auftretenden Berührungsfläche des betreffenden Endes des Stößels eingehalten ist. Es ist dies der Winkel $\beta$ zwischen der Normalen dieser Stirnfläche bzw. Berührungsfläche und der Longitudinalbewegung bzw. Achse des Stößels. Der Winkel $\beta$ liegt zwischen etwa 5 bis 30° bzw. 5 bis 20°. Für einen Antrieb auf einem ebenen, linear zu bewegenden Element bevorzugt man eine konvex gewölbte Stirnfläche des Stößels, wiederum aber in einem derartigen Winkel $\beta$ ausgerichtet. Bei nicht ebener Berührung kommen die jeweiligen entsprechenden Tangentialebenen im Berührungspunkt (bzw. in der Berührungslinie) in Betracht.

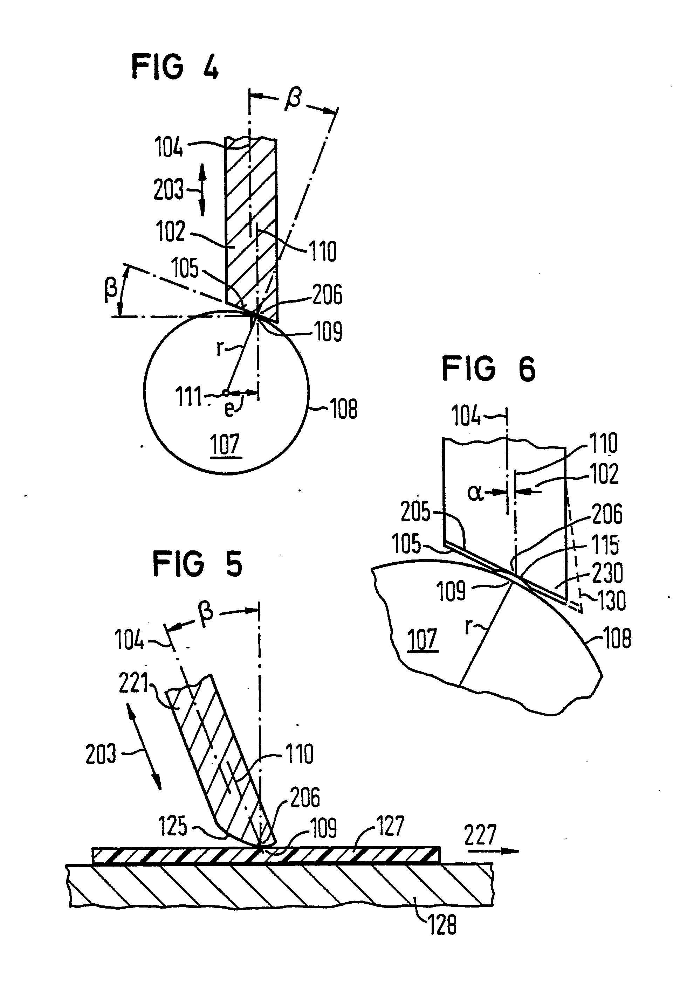

Weitere Erläuterungen gehen aus der nachfolgenden Beschreibung zu den Figuren 4, 5 und 6 hervor.

In Figur 4 ist mit 102 der Abtriebsstößel eines Schwingmotors bezeichnet. Mit dem Doppelpfeil 103 ist die Longitudinal-Schwingungsrichtung des Stößels 102 bezeichnet. Mit der strichpunktierten Linie 104 ist auf die Achse des Stößels 102 hingewiesen. Mit 105 ist die End-bzw. Stirnfläche des Stößels 102 bezeichnet. Diese Fläche 105 ist in der erfindungsgemäß angegebenen Weise schräg zur Achse 104 des Stößels 102 ausgerichtet, nämlich wie dies mit der Figur 4 angedeutet ist. Mit 206 ist der in der Fläche 105 liegende Berührungs-"punkt" der Fläche 105 mit dem Umfang 108 des anzutreibenden Rades 107 (mit dem Radius r) bezeichnet. Der auf dem Umfang 108 liegende Berührungs-"punkt" zwischen dem Rad 107 und dem Stößel 102 ist mit 109 bezeichnet. Diese "Punkte" 206 und 109 bilden je nach Form der Fläche 105 und des Umfangs 108 tatsächlich im wesentlichen einen punktartigen Fleck oder aber auch je eine (mehr oder weniger breite) Linie, die aber in der Figur wiederum nur als "Punkt" darzustellen ist. Mit der gestrichelten Linie 110 ist die durch den Punkt 206 hindurchgehende Parallele zur Achse 104 bezeichnet. Die Linie 110 und die Achse 104 fallen nicht notwendigerweise zusammen. Auf jeden Fall liegt aber die Linie 110 exzentrisch zum Mittelpunkt 111 des Rades 107. Das Maß der Exzentrizität ist mit e angegeben und ergibt sich aus dem Winkel $\beta$. Die Darstellung der Figur 4 zeigt den Zeitbereich, in dem der schwingende Stößel 102 an dem Rad 107 anliegt. Entsprechend der jedoch außerordentlich kleinen Schwingungsamplitude des Stößels 102 gibt es auch Zeitintervalle, in denen die "Punkte" 206 und 109 nicht aneinanderliegen. Das Berühren des Stößels 102 im Punkt 206 am Umfang 108 des Rades 107, dort im Punktt 109, führt zu einer Kraftübertragung mit Übertragung eines Rotationsmoments auf das Rad 107. Derartiges ist z.B. bereits dem Prinzip nach aus der DE-A-25 30 045 bekannt, wohlbemerkt jedoch lediglich dem Prinzip nach. Im Stand der Technik ist für vergleichbare Antriebsübertragung eine derartige vorgesehen, bei der eine Spitze oder Ecke des Stößels auf den Umfang des anzutreibenden Rades auftrifft.

Aus der Krümmung des Umfangs 108 des Rades 107 ergibt sich zwangsläufig, daß eine lediglich tangentiale Berührung in im wesentlichen nur einem Punkt bzw. einer Linie erfolgt, entsprechend den angegebenen Punkten 206 bzw. 109. Es ist zu berücksichtigen, daß im Regelfall ein Rad 107 eine (zur Ebene der Figur 4 senkrechte) Breite hat und der Stößel 102 eine entsprechende Breite aufweist, und die Fläche 105 an z.B. einer Zylinder-Mantelfläche zur jeweiligen antriebsübertragenden Berührung kommt.

Figur 5 zeigt einen Stößel 221, der prinzipiell dem Stößel 102 entspricht. Seine Schwingungsrichtung ist wieder mit dem Doppelpfeil 203 angedeutet. Die Schwingungsachse hat das Bezugszeichen 104. Die Berührungs-"punkte" sind wieder mit 206 und 109 bezeichnet, wobei sich das Bezugszeichen 109 auf ein ebenes Element 127 bezieht, das entsprechend gleitend auf einer Unterlage 128 liegt und in der Richtung 227 anzutreiben ist. Das Element 127 kann z.B. das oberste Blatt Papier eines Stapels Papierblätter sein, das für ein weiteres Ergreifen durch eine entsprechende Transportvorrichtung von der Oberseite des Stapels um ein entsprechendes Maß in Richtung 227 vorgeschoben wird. Mit 125 ist die End-bzw. Stirnfläche dieses Stößels 221 bezeichnet, wobei diese Fläche 125 hier wenigstens in einer Richtung gekrümmt ausgeführt ist. Die ersichtliche Krümmung der Fläche 125 entspricht für die vorliegende Erfindung dem Prinzip nach den Verhältnissen bei der Antriebsübertragung nach Figur 4. Auch bei Antriebsübertragung nach Figur 5 liegt somit lediglich punkt-bzw. linienförmige Berührung (Linie senkrecht zur Ebene der Figur 5) vor. Der erfindungsgemäß angegebene Winkel $\beta$ der Schrägstellung der Fläche 105 in Figur 4 gilt für einen Stößel 121 nach Figur 5 für die Tangente bzw. Tangentialebene zur Fläche 125 im Berührungspunkt 206. Diese Tangentialebene fällt mit der Oberfläche 128 des anzutreibenden Elementes 127 zusammen. Es ergibt sich daraus die Schrägstellung der Achse 104 des Stößels 221 für die Antriebsübertragung nach Figur 5. Dementsprechend liegt bei erfindungsgemäßer Ausführung zwischen der Achse 104 des Stößels 221 und der Normalen zur Oberfläche 128 (wiedergeben als Linie in Figur 5) ein Winkel $\beta$ von 5 bis 30°, vorzugsweise 5 bis 20° vor.

Die Skizze der Figur 6 zeigt eine Erläuterung zu dem mit der Erfindung erzielten Vorteil hoher Lebensdauer. Wie dies in Figur 6, allerdings in erheblicher Übertreibung zwecks deutlicheren Erkennens, dargestellt ist, bildet sich nach einem gewissen Einlaufen anstelle eines Punktes bzw. einer Linie 105 eine größenmäßig allerdings sehr eng begrenzte Fläche 115 aus, die eine konkave Krümmung besitzt, die im wesentlichen der Krümmung der Oberfläche 108 des Rades 107 gleich ist. Nach dem Einlaufen haben sich die Oberfläche 108 und die Fläche 105 des Stößels 102 aufeinander angepaßt und aus einem infinitesimalem Punkt bzw. einer infinitesimal schmalen Linie ist eine wenn auch kleine Fläche 115 geworden. Nach dem Einlaufen an sich auftretende weitere Abnutzung macht sich jedoch nach dem Entstehen der mit 115 bezeichneten Fläche nicht mehr weiter bemerkbar.

Bei einer erfindungsgemäßen Antriebsübertragung ist vorgesehen, daß der longitudinalschwingende Stößel 102, 221 so gehaltert ist, daß diese Schwingungsrichtung 203 im Betrieb beibehalten bleibt. Insbesondere wird dies durch entsprechende Halterung des den Stößel antreibenden piezoelektrischen Antriebs bewirkt, wie er z.B. in der obengenannten parallelen Patentanmeldung angegeben ist.

Wie aus der Figur 6 ersichtlich, tritt bei der erfindungsgemäßen Antriebsübertragung eine mehr oder weniger große Tangentialverformung - (Verformung tangential zur Fläche 105, 125, 115, von der die Friktion ausgeht) auf.

Eine besonders günstige derartige Verformung tritt auf, wenn für das Material des Stößels 102, 221 ein solches mit kleinem Elastizitätsmodul verwendet wird, wie z.B. Magnesium. Eine solche Materialauswahl ist auch günstig für die Bemessung des in der parallelen Anmeldung beschriebenen piezoelektrischen Antriebs.

Um möglicherweise unzulässig hohen Abrieb der Fläche 105, 125 zu vermeiden, empfiehlt es sich, die Oberfläche dieser Fläche 105, 125 des Stößels 102, 221 mit einer härteren Schicht zu versehen, z.B. aus Titan, Nickel oder dgl..

In Figur 6 ist eine solche dünne Schicht mit 205 angedeutet.

Diese Schicht 205 ist dicker als die zu erwartende Formanpassung 115 der Fläche 105 an die Krümmung des Umfanges 108 des Rades 107.

Von besonderem Vorteil ist es, wenn eine solche Dimensionierung der Abmessungen des Stößels und der Wahl des Punktes 206 auf der Fläche 105 getroffen wird, daß diese mit 230 angedeutete Verformung in Resonanz mit der Anregungsfrequenz der longitudinalen Schwingung des Stößels 102 ist. Durch Vergrößerung oder Verkleinerung des Abstandes a zwischen der Achse 104 des Stößels und der durch den Berührungspunkt 206 hindurchgehenden Parallelen 110, d.h. durch mehr oder weniger Abstand des Berührungs-"punktes" von der sich verformenden Spitze bzw. Kante 230 des Stößels 102 kann die Resonanzfrequenz der Verformung 230 des Stößels 102 einjustiert werden.

Bezugszeichenliste

1 Antriebselement
2 erstes Masseteil

3, 103 zweites Masseteil
4 Piezoelement bzw. Piezokeramikteil
5 Isolation
6 hülsenförmiges Teil
7 Halteflansch
8 Längsachse

2 Gewinde
31 Paß-/Preßsitz
32 Querschnittsverjüngung
33 Antriebsstößel
34 Antriebsende
41 -44 Scheiben
45 -49 Elektroden
61 Durchbrüche
204 lamelliertes Piezokeramikteil
241-246 Keramikteil

120 Flüssigkeitszufuhr
121 zerstäubte Flüssigkeit
R Radius eines angetriebenen Rades
102, 221 Stößel
203 Schwingungsrichtung
104 Längsachse des Stößels
105, 125 schräggerichtete Fläche
20 Berührungspunkt
107 Rad
108 Umfang des Rades
109 Berührungspunkt auf dem Rad,
110 Parallele zur Achse 104 durch den Berührungspunkt 206
111 Mittelpunkt des Rades 107
127 anzutreibendes Element
128 Unterlage
227 Bewegungsrichtung
115 Abnutzungsverformung
130 Tangentialverformung
230 verformte Kante des Stößels 102
β Winkel der Schrägstellung
a Abstand zwischen Achse 104 und Linie 110
r Radius des Rades
e Exzentrizität

**Ansprüche**

1. Freischwingendes piezoelektrisches Antriebselement mit wenigstens einem piezokeramischen Körper, mit Elektroden an dem jeweiligen Körper zur elektrischen Anregung der Piezokeramik, mit einem ersten Masseteil aus einem zumindest zu einem wesentlichen Anteil ersten Material, mit einem zweiten Masseteil aus einem zumindest zu einem wesentlichen Anteil zweiten Material, wobei diese beiden Materialien und auch das Keramikmaterial sich hinsichtlich des Produkts aus dem Wert des Elastizitätsmoduls und dem Wert der Dichte möglichst weitgehend unterscheiden, wobei die Keramik zwischen diesen Masseteilen angeordnet und zwischen diesen Masseteilen verlustarm eingespannt ist, und mit einem Halteflansch für dieses Antriebselement, **gekennzeichnet dadurch ,**
-daß ein Teil (6, 106) vorhanden ist, das wenigstens zu einem wesentlichen Anteil die Form einer Hülse hat,
-daß der Halteflansch (7) an diesem Teil (6, 106) angebracht ist,
-daß der piezoelektrische Körper (4, 204) sich im Inneren dieses Teiles (6, 106) befindet,
-daß dieses Teil (6, 106) auf der einen Seite des Halteflansches (7) mit dem ersten Masseteil (2) und auf der anderen Seite des Halteflansches (7) mit dem zweiten Masseteil (3) jeweils fest verbunden ist,
-wobei dieses Teil (6, 106) eine solche Einspannkraft bewirkt, die auch die Kräfte der im Betrieb auftretenden mechanischen Schwingungen übersteigt.

2. Antriebselement nach Anspruch 1, **gekennzeichnet dadurch,** daß das eine Masseteil (103) und das hülsenförmige Teil (106) einstückig zu einer Art Topf verbunden sind.(Fig.2)

3. Antriebselement nach Anspruch 1 oder 2, **gekennzeichnet dadurch,** daß an dem wenigstens einen Ende das hülsenförmige Teil (6, 106) mit dem zugeordneten Masseteil (2, 3) stoffschlüssig verbunden ist.

4. Antriebselement nach Anspruch 1 oder 2, **gekennzeichnet dadurch,** daß an dem wenigstens einen Ende das hülsenförmige Teil (6, 106) mit dem zugeordneten Masseteil (2, 3) formschlüssig verbunden ist.

5. Antriebselement nach Anspruch 1 oder 2, **gekennzeichnet dadurch,** daß an dem wenigstens einen Ende das hülsenförmige Teil (6, 106) mit dem zugeordneten Masseteil (2, 3) kraftschlüssig verbunden ist.

6. Antriebselement nach einem der Ansprüche 1 bis 5, **gekennzeichnet dadurch,** daß der piezoelektrische Körper (4) aus $2^x$ n-Teilen (41, 42, ...) zusammengesetzt ist.

7. Antriebselement nach einem der Ansprüche 1 bis 6, **gekennzeichnet dadurch,** daß der piezoelektrische Körper ein parallel zur Axialrichtung des Antriebselements lamellierter Körper (204) ist (Fig. 3).

8. Antriebselement nach einem der Ansprüche 1 bis 7, **gekennzeichnet dadurch,** daß das eine Masseteil (3, 103) als Amplitudentransformator (32) mit einem Stößel (33) ausgebildet ist.

9. Anwendung eines Antriebselementes nach einem der Ansprüche 1 bis 8 als piezoelektrischer Motor (Fig. 1).

10. Anwendung eines piezoelektrischen Antriebselementes nach einem der Ansprüche 1 bis 8 als Flüssigkeitszerstäuber (Fig. 2).

11. Antriebsübertragung für einen longitudinal - schwingenden Stößelabtrieb (203), geeignet für einen piezoelektrischen Motor nach einem der Ansprüche 1 bis 10, **gekennzeichnet dadurch,**
-daß an dem abtreibenden Ende des Stößels (102, 221) die im Betrieb ausgehende Friktion von einer solchen Fläche (105, 125, 115) auf das anzutreibende Element (107, 127) ausgeht,
-daß diese Fläche (105, 125, 115) gegenüber der longitudinalen Schwingungsrichtung (203) abgeschrägte Form (Fig. 4, Fig. 5) aufweist,
-wobei der Winkel ($\beta$) der Abschrägung im Berührungspunkt (206, 109) zwischen dem abtreibenden Stößel (102, 221) und dem anzutreibenden Element (107, 127) bezogen auf die Richtung der longitudinalen Schwingungsbewegung (203) 5 bis 30° beträgt und
-wobei wenigstens eine der beiden einander gegenüberliegenden Flächen (105, 125; 108, 128) des abtreibenden Stößels (102, 221) und des anzutreibenden Elementes (107, 127) konvexe Form derart aufweist, daß eine tangentiale Berührung - (Fig. 4, 5, 6) vorliegt.

12. Antriebsübertragung nach Anspruch 11, **gekennzeichnet dadurch,** daß der Winkel ($\beta$) 5 bis 20° beträgt.

13. Antriebsübertragung nach Anspruch 11 oder 12, **gekennzeichnet dadurch,**
daß diese Fläche (125) bezüglich einer Achse konvexe Form besitzt, wobei diese Achse senkrecht auf der Vorschubrichtung (227) und senkrecht auf der longitudinalen Schwingungsrichtung steht (Fig. 5).

14. Antriebsübertragung nach Anspruch 11 oder 12, **gekennzeichnet dadurch ,**
daß diese Fläche zweiachsig konvex gekrümmt - (ballig) ist.

15. Antriebsübertragung nach einem der Ansprüche 11 bis 14, **gekennzeichnet dadurch,**
daß die Lage des Berührungs-"punktes" (206) auf der schrägen Fläche (105) des Stößels (102) so bemessen ist, daß die Resonanzfrequenz der Verformung (230) des berührenden Endes des Stößels (102) auf die Anregungsfrequenz der Longitudinalschwingung des Stößels angepaßt ist.

16. Antriebsübertragung nach einem der Ansprüche 11 bis 14, **gekennzeichnet dadurch,**
daß bei gegebener Lage des Berührungs-"punktes" (206) der abgeschrägten Fläche (105) des Stößels (102) die Schwingungsfrequenz der Longitudinalschwingung (203) des Stößels (102, 221) auf die gegebene Resonanzfrequenz der Verformungsbewegung (230) abgestimmt ist.

# FIG 1

# FIG 2

# FIG 3

FIG 4

FIG 5

FIG 6